# EUROPEAN PATENT SPECIFICATION

(11) **EP 3 240 423 B1**
(45) Date of publication and mention of the grant of the patent: **21.10.2020**
(21) Application number: 15823083.9
(22) Date of filing: 17.12.2015
(51) Int. Cl.: A01N 63/00, A01P 3/00

(54) **METHOD FOR USING A BACILLUS SUBTILIS OR BACILLUS PUMILUS STRAIN TO TREAT OR PREVENT PINEAPPLE DISEASE**
VERFAHREN ZUR VERWENDUNG EINES BACILLUS SUBTILIS-ODER BACILLUS PUMILUS-STAMMES ZUR BEHANDLUNG ODER VORBEUGUNG VON ANANASKRANKHEIT
PROCÉDÉ D'UTILISATION D'UNE SOUCHE DE BACILLUS SUBTILIS OU DE BACILLUS PUMILUS POUR TRAITER OU PRÉVENIR UNE MALADIE D'ANANAS

(30) Priority: 22.12.2014 US 201462095393 P
(43) Date of publication of application: 08.11.2017
(73) Proprietor: Bayer CropScience LP, St. Louis MO 63167 (US)
(72) Inventor: BRANDI, Fabio, 13.087-511 Campinas - SP (BR); TRAINER, Shane, Howthorn East, Victoria 3123 (AU); WESTERHUIS, Darren, Flying Fish Point, Queensland 4860 (AU)
(74) Representative: BIP Patents
(86) International application number: PCT/US2015/066291
(87) International publication number: WO 2016/106063

(56) References cited:
- WO-A2-2010/108973
- XIAOHUA ZHANG ET AL: "Identification and Evaluation of Strain B37 of Bacillus subtilis Antagonistic to Sapstain Fungi on Poplar Wood", THE SCIENTIFIC WORLD JOURNAL, vol. 91, no. 4, 21 October 2014 (2014-10-21), pages 1526-10, XP055253073, ISSN: 2356-6140, DOI: 10.1007/BF00023946
- ESHITA, S.M.: "Bacillomycin Lc, a new antibiotic of the ituringroup: isolation, structures and antifungal activities of the congeners", JOURNAL OF ANTIBIOTICS, vol. 48, no. 11, 30 November 1995 (1995-11-30), pages 1240-1247, XP009188743,
- C. R. KRAUSE: "MORPHOLOGICAL AND CYTOLOGICAL EFFECTS ON CERATOCYSTIS ULMI OF AN ANTIFUNGAL ANTIBIOTIC PRODUCED BY BACILLUS SUBTILIS. SOIL", PHYTOPATHOLOGY, vol. 77, no. 12, 31 December 1987 (1987-12-31), page 1771, XP055253169, US ISSN: 0031-949X
- Anomymous: "BIOPESTICIDE REGISTRATION ACTION DOCUMENT Bacillus subtilis Strain QST", , 9 August 2006 (2006-08-09), XP055505307, Retrieved from the Internet: URL:https://www3.epa.gov/pesticides/chem_s earch/reg_actions/registration/decision_PC -006479_9-Aug-06.pdf [retrieved on 2018-09-06]
- M. I. Talukder: "Management of Pineapple Disease of Sugarcane through Biological Means", journal of agricultural and rural development, 30 June 2007 (2007-06-30), pages 79-83, XP055505344, ISSN: 1810-1860

## Description

### CROSS-REFERENCE TO RELATED APPLICATIONS

This application claims the benefit under 35 U.S.C. Section 119(e) of U.S. Provisional Patent Application No. 62/095,393, filed December 22, 2014.

### FIELD OF INVENTION

The present invention relates to biological control of diseases caused by *Ceratocystis paradoxa* (pineapple disease) in sugarcane.

### BACKGROUND OF INVENTION

Sugarcane is a commercially important gramineous plant. Sugarcane acreage is increasing, and its uses include the production of sugar, Falernum, molasses, rum, cachaça (the national spirit of Brazil), and ethanol for fuel. The bagasse that remains after sugarcane crushing can be used to provide both heat energy, used in the mill, and electricity, which is typically sold to the consumer electricity grid and as a feedstock for the production of ethanol.

Sugarcane belongs to the family of tufted grasses. Sugarcane is propagated by planting whole sugarcane stalks or cuttings of the sugarcane stalk including one or more buds. These cuttings are sometimes referred to as seed pieces or billets. Commercial sugarcane planting involves the planting, either by hand or mechanically, of whole sugarcane stalks or seed pieces.

Pineapple disease is an economically important sugarcane disease that occurs in almost all countries where sugarcane is grown. The disease is caused by the fungus *Ceratocystis paradoxa* which induces seed piece decay following planting. The disease derives its name from the scent produced by rotting seed pieces, which is similar to that of ripe pineapples. WO2010/108973 discloses sequential application of many biological control agents with an equally large list of fungicides. Zhang et al. (The Scientific World Journal 91(4), pp 1526-10) discloses an effect of *B. subtilis* B37 against Ceratocystis adiposa. Eshita (Journal of Antibiotics 48(11), pp. 1240-47) discloses the identification of a novel fungicidal iturin from a *B. subtilis* strain and its antifungal activity on the examples of a few pathogenic strains, inter alia, C. fagacearum.

Synthetic fungicides often are non-specific and therefore can act on organisms other than the target organisms, including other naturally occurring beneficial organisms. Consumers worldwide are increasingly conscious of the potential environmental and health problems associated with the residuals of chemicals, particularly in food products. This has resulted in growing consumer pressure to reduce the use or at least the quantity of chemical (i.e., synthetic) pesticides. Thus, there is a need to manage food chain requirements while still allowing effective pest control.

A further problem arising with the use of synthetic fungicides is that the repeated and exclusive application of a fungicide often leads to selection of resistant microorganisms. Normally, such strains are also cross-resistant against other active ingredients having the same mode of action. An effective control of the pathogens with said active compounds is then not possible any longer. However, active ingredients having new mechanisms of action are difficult and expensive to develop.

The risk of resistance development in pathogen populations as well as environmental and human health concerns have fostered interest in identifying alternatives to synthetic fungicides for managing plant pests and diseases.

The use of biological control agents (BCAs) is an alternative. In some cases, the effectiveness of BCAs is not at the same level as that of conventional fungicides, especially in cases of severe infection pressure. Consequently, in some circumstances, biological control agents, their mutants and metabolites produced by them are, in particular in low application rates, not entirely satisfactory.

Thus, there is a constant need for developing new, alternative plant protection agents which in some areas at least help fulfill the above-mentioned requirements. Specifically, there is a need for more efficient methods of controlling pineapple disease in sugarcane.

### SUMMARY OF THE INVENTION

In view of this, it was in particular an object of the present invention to provide compositions which exhibit activity against phytopathogens (e.g., *Ceratocystis paradoxa*). Moreover, it was a further particular object of the present invention to reduce the application rates and broaden the activity spectrum of the biological control agents and/or the synthetic fungicides, and thereby to provide a composition which, preferably at a reduced total amount of active compounds applied, has improved activity against phytopathogens. In particular, it was a further object of the present disclosure to provide a composition which, when applied to a crop, results in a decreased amount of residues in the crop, thereby reducing the risk of resistance formation and nevertheless provides efficient pest and/or disease control.

Accordingly, it was found that these objectives are at least partly solved by the compositions and methods according to the invention as defined in the following. The composition used according to the present invention preferably fulfills the above-described needs. It has been discovered surprisingly that the application of the compositions according to the present invention to plants, plant parts, harvested fruits, vegetables and/or plant's locus of growth preferably allows efficient control of *Ceratocystis paradoxa,* the causative agent of pineapple disease.

In some embodiments, the present invention is directed to a method for controlling *Ceratocystis paradoxa* in a plant, the method comprising applying to a plant and/or locus for plant growth an effective amount of at least one biological control agent which is *Bacillus subtilis* QST713 as characterized in the claims

In some embodiments, the applying is preceded by identifying that the plant and/or the locus for plant growth needs treatment. The plant may comprise propagation material. Non-limiting examples of propagation material include seedlings, rhizomes, nursery plants, cuttings, and seed.

The plant may be any one of sugarcane, pineapple, banana, cacao, coconut, and oil palm. In certain embodiments, the plant is sugarcane.

The present invention also provides methods of treating a plant to control *Ceratocystis paradoxa* wherein the methods comprise applying an effective amount of at least one biological control agent which is *Bacillus subtilis* QST713, metabolites produced therefrom, and combinations thereof to the plant, to a part of the plant and/or to the locus surrounding the plant, such as to a plant's growth media.

In some embodiments, such application results in enhanced yield and/or improved health of the plant. Thus, for example, the present invention further provides such methods wherein the compositions of the present invention are applied to the soil. For example, the composition can be applied before, during or after the plant or plant part comes into contact with the soil. As further examples, the methods of the present invention include but are not limited to applying the composition using an application method such as soil surface drench, shanked-in, injected or applied in-furrow. In some aspects, the *Bacillus subtilis* QST713 is applied to the soil in contact with plant roots or soil at a base of a plant.

In certain aspects, the method further comprises applying to the plant and/or locus for plant growth an insecticide and/or a fungicide. The insecticide and/or fungicide may be applied sequentially or simultaneously with the *Bacillus subtilis* QST713 and/or metabolites produced therefrom.

In other aspects, the at least one biological control agent is a fermentation product. For example, the fermentation product may comprise *Bacillus subtilis* QST713 cells, metabolites and residual fermentation broth.

In other embodiments, the present invention is directed to a use of a composition comprising *Bacillus* QST713, metabolites produced therefrom, and combinations thereof as characterized in the claims for controlling *Ceratocystis paradoxa* in a plant.

### BRIEF DESCRIPTION OF THE DRAWINGS

**FIG. 1** depicts the average number of emerged sugarcane shoots for untreated control (UTC) plants; plants treated with SERENADE® ASO *(Bacillus subtilis* QST713) at various rates, and plants treated with SHIRTAN® (methoxy ethyl mercuric chloride). The SERENADE® ASO *(Bacillus subtilis* QST713) and SHIRTAN® (methoxy ethyl mercuric chloride) were each applied in combination with LORSBAN® 500 EC (chlorpyrifos).
**FIG. 2** shows the zones of inhibition of *Ceratocystis paradoxa* by *Bacillus subtilis* QST713 **(****FIG. 2A****)** and by *Bacillus pumilus* QST2808 **(****FIG. 2B****).**

### DETAILED DESCRIPTION OF THE INVENTION

The following description includes information that may be useful in understanding the present invention.

The SERENADE® product (EPA Registration No. 69592-12) contains a unique strain of *Bacillus subtilis* (strain QST713) and many different lipopeptides that work synergistically to destroy disease pathogens and provide superior antimicrobial activity. The SERENADE® product is used to protect plants such as vegetables, fruit, nut and vine crops against diseases such as Fire Blight, Botrytis, Sour Rot, Rust, Sclerotinia, Powdery Mildew, Bacterial Spot and White Mold. The SERENADE® products are available as either liquid or dry formulations which can be applied as a foliar and/or soil treatment. Copies of EPA Master Labels for SERENADE® products, including SERENADE® ASO, SERENADE® MAX, SERENADE® OPTIMUM (or OPTI), and SERENADE SOIL®, are publicly available through National Pesticide Information Retrieval System's (NPIRS®) USEPA/OPP Pesticide Product Label System (PPLS).

SERENADE® ASO (Aqueous Suspension-Organic) contains 1.34% of dried QST713 as an active ingredient and 98.66% of other ingredients. SERENADE® ASO is formulated to contain a minimum of 1 x 10⁹ cfu/g of QST713 while the maximum amount of QST713 has been determined to be 3.3 x 10¹⁰ cfu/g. Alternate commercial names for SERENADE® ASO include SERENADE BIOFUNGICIDE®, SERENADE SOIL® and SERENADE® GARDEN DISEASE. For further information, see the U.S. EPA Master Labels for SERENADE® ASO dated January 4, 2010 and SERENADE SOIL®, each of which is incorporated by reference herein in its entirety.

SERENADE® MAX contains 14.6% of dried QST713 as an active ingredient and 85.4% of other ingredients. SERENADE® MAX is formulated to contain a minimum of 7.3 x 10⁹ cfu/g of QST713 while the maximum amount of QST713 has been determined to be 7.9 x 10¹⁰ cfu/g. For further information, see the U.S. EPA Master Label for SERENADE® MAX, which is incorporated by reference herein in its entirety.

SERENADE® OPTIMUM (or OPTI) contains 26.2% of dried QST713 as an active ingredient and 73.8% of other ingredients. SERENADE® OPTIMUM (or OPTI) is formulated to contain a minimum of 1.31 x 10¹⁰ cfu/g of QST713. For further information, see the U.S. EPA Master Label for SERENADE® OPTIMUM (or OPTI), which is incorporated by reference herein in its entirety.

A suitable formulation of *Bacillus pumilus* QST2808 is commercially available under the tradename of SONATA® (EPA Reg. No. 264-1153), contains 1.38% of dried QST2808, and is formulated to contain a minimum of 1 x 10⁹ cfu/g of QST2808. Another suitable formulation of *Bacillus pumilus* QST2808 is commercially available under the tradename of BALLAD® PLUS (EPA Reg. No. 69592-13), contains 1.38% of dried QST2808, and is formulated to contain a minimum of 1 x 10¹⁰ cfu/g of QST2808.

NRRL is the abbreviation for the Agricultural Research Service Culture Collection, an international depositary authority for the purposes of deposing microorganism strains under the Budapest Treaty on the international recognition of the deposit of microorganisms for the purposes of patent procedure, having the address National Center for Agricultural Utilization Research, Agricultural Research Service, U.S. Department of Agriculture, 1815 North University Street, Peoria, Illinois 61604, U.S.A.

*Bacillus subtilis* QST713, its mutants, its supernatants, and its lipopeptide metabolites, and methods for their use to control plant pathogens and insects are fully described in U.S. Patent Nos. 6,060,051; 6,103,228; 6,291,426; 6,417,163; and 6,638,910. In these U.S. patents, the strain is referred to as AQ713, which is synonymous with QST713. *Bacillus subtilis* QST713 has been deposited with the NRRL on May 7, 1997, under the provisions of the Budapest Treaty on the International Recognition of the Deposit of Microorganisms for the Purpose of Patent Procedure under Accession Number B-21661. Any references in this specification to QST713 refer to *Bacillus subtilis* QST713 (aka AQ713) as present in the SERENADE® products, deposited under NRRL Accession No. B-21661, or prepared in bioreactors or shake flasks under conditions that simulate production of the SERENADE® product.

At the time of filing U.S. Patent Application No. 09/074,870 in 1998, which corresponds to the above patents, the QST713 strain was designated as a *Bacillus subtilis* based on classical, physiological, biochemical and morphological methods. Taxonomy of the *Bacillus* species has evolved since then, especially in light of advances in genetics and sequencing technologies, such that species designation is based largely on DNA sequence rather than the methods used in 1998. After aligning protein sequences from *B. amyloliquefaciens* FZB42, *B. subtilis* 168 and QST713, approximately 95% of proteins found in *B. amyloliquefaciens* FZB42 are 85% or greater identical to proteins found in QST713; whereas only 35% of proteins in B. *subtilis* 168 are 85% or greater identical to proteins in QST713. However, even with the greater reliance on genetics, there is still taxonomic ambiguity in the relevant scientific literature and regulatory documents, reflecting the evolving understanding of *Bacillus* taxonomy over the past 15 years. For example, a pesticidal product based on *B. subtilis* strain FZB24, which is as closely related to QST713 as is FZB42, is classified in documents of the Environmental Protection Agency as *B. subtilis* var. *amyloliquefaciens.* Due to these complexities in nomenclature, this particular *Bacillus* species is variously designated, depending on the document, as *B. subtilis, B. amyloliquefaciens,* and *B. subtilis* var. *amyloliquefaciens.* Therefore, we have retained the *B. subtilis* designation of QST713 rather than changing it to *B. amyloliquefaciens,* as would be expected currently based solely on sequence comparison and inferred taxonomy. As regulatory authorities in various countries may require registration under any one of the possible taxonomic classifications, it is to be understood for purposes of this patent application that the strain deposited as *Bacillus subtilis* QST713 and assigned NRRL Accession No. B-21661 is equivalent to *Bacillus amyloliquefaciens* QST713.

As explained in detail in international patent publication number WO 2012/087980, cultures of *B. subtilis* QST713 are actually a mixture of wild type cells and a relatively small percentage of variant cell types, which have been designated as "sandpaper cells", based on the morphology of their colonies.

The *B. subtilis* strain AQ30002 (aka QST30002) or AQ30004 (aka QST30004), deposited as Accession Nos. NRRL B-50421 and NRRL B-50455 which are described in International Patent Publication No. WO 2012/087980 or mutants of these *B. subtilis* strains having all of the physiological and morphological characteristics of *B. subtilis* strain AQ30002 (aka QST30002) or AQ30004 (aka QST30004) can also be used in the method of the invention, in mixture with *B. subtilis* QST713.

*Bacillus pumilus* QST2808, its mutants, supernatants, and methods for their use to control plant pathogens and insects are fully described in U.S. Patent Nos. 6,245,551 and 6,586,231. In these U.S. patents, the strain is referred to as NRRL No. B-30087, which is synonymous with QST2808. *Bacillus pumilus* QST2808 was deposited with the NRRL on January 14, 1999, under the provisions of the Budapest Treaty on the International Recognition of the Deposit of Microorganisms for the Purpose of Patent Procedure under Accession Number B-30087. Any references in this specification to QST2808 refer to *Bacillus pumilus* QST2808.

Compositions used in the present invention can be obtained by culturing *Bacillus subtilis* QST713 according to methods well known in the art, including by using the media and other methods described in U.S. Patent No. 6,060,051. Other compositions can be obtained by culturing *Bacillus pumilus,* and particularly *Bacillus pumilus* strain QST2808, according to methods well known in the art, including use of the media and other methods described in U.S. Patent No. 6,245,551. Conventional large-scale microbial culture processes include submerged fermentation, solid state fermentation, or liquid surface culture. Towards the end of fermentation, as nutrients are depleted, *Bacillus subtilis* and *Bacillus pumilus* cells begin the transition from growth phase to sporulation phase, such that the final product of fermentation is largely spores, metabolites and residual fermentation medium. Sporulation is part of the natural life cycle of *Bacillus subtilis* and *Bacillus pumilus* and is generally initiated by the cell in response to nutrient limitation. Fermentation is configured to obtain high levels of colony forming units of *Bacillus subtilis* and *Bacillus pumilus* and to promote sporulation. The bacterial cells, spores and metabolites in culture media resulting from fermentation may be used directly or concentrated by conventional industrial methods, such as centrifugation, tangential-flow filtration, depth filtration, and evaporation. Fermentation broth and broth concentrate are both referred to herein as "fermentation products." Compositions of the present invention include fermentation products. In some embodiments, the concentrated fermentation broth is washed, for example, via a diafiltration process, to remove residual fermentation broth and metabolites.

The fermentation broth or broth concentrate can be dried with or without the addition of carriers using conventional drying processes or methods such as spray drying, freeze drying, tray drying, fluidized-bed drying, drum drying, or evaporation.

The resulting dry products may be further processed, such as by milling or granulation, to achieve a specific particle size or physical format. Carriers, described below, may also be added post-drying.

Cell-free preparations of fermentation broth of *Bacillus* used in the present invention can be obtained by any means known in the art, such as extraction, centrifugation and/or filtration of fermentation broth. Those of skill in the art will appreciate that so-called cell-free preparations may not be devoid of cells but rather are largely cell-free or essentially cell-free, depending on the technique used (e.g., speed of centrifugation) to remove the cells. The resulting cell-free preparation may be dried and/or formulated with components that aid in its application to plants or to plant growth media. Concentration methods and drying techniques described above for fermentation broth are also applicable to cell-free preparations.

Metabolites of *Bacillus subtilis* can be obtained according to the methods set forth in U.S. Patent No. 6,060,051. Metabolites of *Bacillus pumilus,* including *Bacillus pumilus* strain QST2808, can be obtained according to the methods set forth in U.S. Patent No. 6,245,551. The term "metabolites" as used herein may refer to semi-pure and pure or essentially pure metabolites or to metabolites that have not been separated from *Bacillus subtilis* and/or *Bacillus pumilus.* In some embodiments, after a cell-free preparation is made by centrifugation of fermentation broth, the metabolites may be purified by size exclusion filtration such as the Sephadex resins including LH-20, G10, and G15 and G25 that group metabolites into different fractions based on molecular weight cut-off, such as molecular weight of less than about 2000 daltons, less than about 1500 daltons, less than about 1000 daltons and so on, as the lipopeptides are between 800 daltons and 1600 daltons.

Concentration methods and drying techniques described above for formulation of fermentation broth are also applicable to metabolites.

Compositions used in the present invention may include formulation inerts added to compositions comprising cells, cell-free preparations or metabolites to improve efficacy, stability, and usability and/or to facilitate processing, packaging and end-use application. Such formulation inerts and ingredients may include carriers, stabilization agents, nutrients, or physical property modifying agents, which may be added individually or in combination. In some embodiments, the carriers may include liquid materials such as water, oil, and other organic or inorganic solvents and solid materials such as minerals, polymers, or polymer complexes derived biologically or by chemical synthesis. In some embodiments, the carrier is a binder or adhesive that facilitates adherence of the composition to a plant part, such as a seed or root. *See,* for example, Taylor, A.G., et al., "Concepts and Technologies of Selected Seed Treatments", Annu. Rev. Phytopathol. 28: 321-339 (1990). The stabilization agents may include anti-caking agents, anti-oxidation agents, desiccants, protectants or preservatives. The nutrients may include carbon, nitrogen, and phosphors sources such as sugars, polysaccharides, oil, proteins, amino acids, fatty acids and phosphates. The physical property modifiers may include bulking agents, wetting agents, thickeners, pH modifiers, rheology modifiers, dispersants, adjuvants, surfactants, antifreeze agents or colorants. In some embodiments, the composition comprising cells, cell-free preparation or metabolites produced by fermentation can be used directly with or without water as the diluent without any other formulation preparation. In some embodiments, the formulation inerts are added after concentrating fermentation broth and during and/or after drying.

Compositions used in the present invention may include carriers, which are inert formulation ingredients added to compositions comprising a lipopeptide-containing fermentation product, cell-free preparations of lipopeptides or purified, semi-purified or crude extracts of lipopeptides to improve recovery, efficacy, or physical properties and/or to aid in packaging and administration. Such carriers may be added individually or in combination.

The active ingredients specified herein by their "common name" are known and described, for example, in the Pesticide Manual ("The Pesticide Manual", 14th Ed., British Crop Protection Council 2006) or can be searched in the internet (e.g. http://www.alanwood.net/pesticides).

The compositions used in the present invention for controlling *Ceratocystis paradoxa,* the causative agent of pineapple disease, may be mixed with and/or used in rotation with other chemical and non-chemical additives, adjuvants and/or treatments, wherein such treatments include but are not limited to chemical and non-chemical fungicides, insecticides, miticides, nematicides, fertilizers, nutrients, minerals, auxins, growth stimulants and the like. In some embodiments, the compositions of the present invention when mixed with or used in rotation with other chemical and non-chemical additives, adjuvants and/or treatments produce a synergistic or superadditive effect in controlling *Ceratocystis* spp.

In one embodiment, the *Bacillus subtilis* QST713 and/or metabolites produced therefrom are mixed with and/or used in rotation with an insecticide.

According to one embodiment of the present invention preferred insecticides are selected from the group consisting of
(1) Acetylcholinesterase (AChE) inhibitors, for example
   carbamates, e.g., Alanycarb (I1), Aldicarb (I2), Bendiocarb (13), Benfuracarb (14), Butocarboxim (15), Butoxycarboxim (16), Carbaryl (17), Carbofuran (18), Carbosulfan (19), Ethiofencarb (110), Fenobucarb (I11), Formetanate (112), Furathiocarb (113), Isoprocarb (114), Methiocarb (115), Methomyl (116), Metolcarb (117), Oxamyl (118), Pirimicarb (119), Propoxur (120), Thiodicarb (121), Thiofanox (122), Triazamate (123), Trimethacarb (124), XMC (125), and Xylylcarb (126); or
   organophosphates, e.g., Acephate (127), Azamethiphos (128), Azinphos-ethyl (129), Azinphos-methyl (130), Cadusafos (131), Chlorethoxyfos (132), Chlorfenvinphos (133), Chlormephos (134), Chlorpyrifos (135), Chlorpyrifos-methyl (136), Coumaphos (137), Cyanophos (138), Demeton-S-methyl (139), Diazinon (140), Dichlorvos/DDVP (141), Dicrotophos (142), Dimethoate (143), Dimethylvinphos (144), Disulfoton (145), EPN (146), Ethion (147), Ethoprophos (148), Famphur (149), Fenamiphos (150), Fenitrothion (151), Fenthion (152), Fosthiazate (153), Heptenophos (154), Imicyafos (155), Isofenphos (156), Isopropyl O-(methoxyaminothio-phosphoryl) salicylate (157), Isoxathion (158), Malathion (159), Mecarbam (160), Methamidophos (161), Methidathion (162), Mevinphos (163), Monocrotophos (164), Naled (165), Omethoate (166), Oxydemeton-methyl (167), Parathion (168), Parathion-methyl (169), Phenthoate (170), Phorate (171), Phosalone (172), Phosmet (173), Phosphamidon (174), Phoxim (175), Pirimiphos-methyl (176), Profenofos (177), Propetamphos (178), Prothiofos (179), Pyraclofos (180), Pyridaphenthion (181), Quinalphos (182), Sulfotep (183), Tebupirimfos (184), Temephos (185), Terbufos (186), Tetrachlorvinphos (187), Thiometon (188), Triazophos (189), Trichlorfon (190), and Vamidothion (191);
(2) GABA-gated chloride channel antagonists, for example
   cyclodiene organochlorines, e.g., Chlordane (192) and Endosulfan (193); or
   phenylpyrazoles (fiproles), e.g., Ethiprole (194) and Fipronil (195);
(3) Sodium channel modulators / voltage-dependent sodium channel blockers, for example pyrethroids, e.g., Acrinathrin (196), Allethrin (197), d-cis-trans Allethrin (198), d-trans Allethrin (199), Bifenthrin (1100), Bioallethrin (1101), Bioallethrin S-cyclopentenyl isomer (1102), Bioresmethrin (1103), Cycloprothrin (1104), Cyfluthrin (1105), beta-Cyfluthrin (1106), Cyhalothrin (1107), lambda-Cyhalothrin (1108), gamma-Cyhalothrin (1109), Cypermethrin (I110), alpha-Cypermethrin (I111), beta-Cypermethrin (I112), theta-Cypermethrin (I113), zeta-Cypermethrin (1114), Cyphenothrin [(1R)-trans isomers] (1115), Deltamethrin (1116), Empenthrin [(EZ)-(1R) isomers) (1117), Esfenvalerate (1118), Etofenprox (1119), Fenpropathrin (1120), Fenvalerate (1121), Flucythrinate (1122), Flumethrin (1123), tau-Fluvalinate (1124), Halfenprox (1125), Imiprothrin (1126), Kadethrin (1127), Permethrin (1128), Phenothrin [(1R)-trans isomer) (1129), Prallethrin (1130), Pyrethrine (pyrethrum) (1131), Resmethrin (1132), Silafluofen (1133), Tefluthrin (1134), Tetramethrin (1135), Tetramethrin [(1R) isomers)] (1136), Tralomethrin (1137), and Transfluthrin (1138); or DDT (1139); or Methoxychlor (1140);
(4) Nicotinic acetylcholine receptor (nAChR) agonists, for example neonicotinoids, e.g., Acetamiprid (1141), Clothianidin (1142), Dinotefuran (1143), Imidacloprid (1144), Nitenpyram (1145), Thiacloprid (1146), and Thiamethoxam (1147); or Nicotine (1148); or Sulfoxaflor (1149).
(5) Nicotinic acetylcholine receptor (nAChR) allosteric activators, for example spinosyns, e.g. Spinetoram (1150) and Spinosad (1151);
(6) Chloride channel activators, for example avermectins/milbemycins, e.g., Abamectin (1152), Emamectin benzoate (1153), Lepimectin (1154), and Milbemectin (1155);
(7) Juvenile hormone mimics, for example juvenile hormon analogues, e.g., Hydroprene (1156), Kinoprene (1157), and Methoprene (1158); or Fenoxycarb (1159); or Pyriproxyfen (1160);
(8) Miscellaneous non-specific (multi-site) inhibitors, for example alkyl halides, e.g., Methyl bromide (1161) and other alkyl halides; or Chloropicrin (1162); or Sulfuryl fluoride (1163); or Borax (1164); or Tartar emetic (1165);
(9) Selective homopteran feeding blockers, e.g., Pymetrozine (1166); or Flonicamid (1167);
(10) Mite growth inhibitors, e.g., Clofentezine (1168), Hexythiazox (1169), and Diflovidazin (1170); or Etoxazole (1171);
(11) Microbial disruptors of insect midgut membranes, e.g., *Bacillus thuringiensis* subspecies israelensis (1172), *Bacillus thuringiensis* subspecies aizawai (1173), *Bacillus thuringiensis* subspecies kurstaki (1174), *Bacillus thuringiensis* subspecies tenebrionis (1175), and B.t. crop proteins: Cry1Ab, Cry1Ac, Cry1Fa, Cry1A.105, Cry2Ab, Vip3A, mCry3A, Cry3Ab, Cry3Bb, Cry34 Ab1/35Ab1 (1176); or *Bacillus sphaericus* (1177);
(12) Inhibitors of mitochondrial ATP synthase, for example Diafenthiuron (1178); or organotin miticides, e.g., Azocyclotin (1179), Cyhexatin (1180), and Fenbutatin oxide (1181); or Propargite (1182); or Tetradifon (1183);
(13) Uncouplers of oxidative phoshorylation via disruption of the proton gradient, for example Chlorfenapyr (1184), DNOC (1185), and Sulfluramid (1186);
(14) Nicotinic acetylcholine receptor (nAChR) channel blockers, for example Bensultap (1187), Cartap hydrochloride (1188), Thiocyclam (1189), and Thiosultap-sodium (1190);
(15) Inhibitors of chitin biosynthesis, type 0, for example Bistrifluron (1191), Chlorfluazuron (1192), Diflubenzuron (1193), Flucycloxuron (1194), Flufenoxuron (1195), Hexaflumuron (1196), Lufenuron (1197), Novaluron (1198), Noviflumuron (1199), Teflubenzuron (1200), and Triflumuron (1201);
(16) Inhibitors of chitin biosynthesis, type 1, for example Buprofezin (1202);
(17) Moulting disruptors, for example Cyromazine (I203);
(18) Ecdysone receptor agonists, for example Chromafenozide (1204), Halofenozide (1205), Methoxyfenozide (1206), and Tebufenozide (1207);
(19) Octopamine receptor agonists, for example Amitraz (1208);
(20) Mitochondrial complex III electron transport inhibitors, for example Hydramethylnon (1209); or Acequinocyl (1210); or Fluacrypyrim (1211);
(21) Mitochondrial complex I electron transport inhibitors, for example
   METI acaricides, e.g., Fenazaquin (1212), Fenpyroximate (1213), Pyrimidifen (1214), Pyridaben (1215), Tebufenpyrad (1216), and Tolfenpyrad (1217); or Rotenone (Derris) (1218);
(22) Voltage-dependent sodium channel blockers, e.g., Indoxacarb (1219); or Metaflumizone (1220);
(23) Inhibitors of acetyl CoA carboxylase, for example tetronic and tetramic acid derivatives, e.g., Spirodiclofen (1221), Spiromesifen (1222), and Spirotetramat (1223);
(24) Mitochondrial complex IV electron transport inhibitors, for example phosphines, e.g., Aluminium phosphide (1224), Calcium phosphide (1225), Phosphine (1226), and Zinc phosphide (1227); or Cyanide (1228);
(25) Mitochondrial complex II electron transport inhibitors, for example beta-ketonitrile derivatives, e.g., Cyenopyrafen (1229) and Cyflumetofen (1230);
(26) Ryanodine receptor modulators, for example diamides, e.g., Chlorantraniliprole (1231), Cyantraniliprole (1232), and Flubendiamide (1233);

Further active ingredients with unknown or uncertain mode of action, for example Amidoflumet (1234), Azadirachtin (1235), Benclothiaz (1236), Benzoximate (1237), Bifenazate (1238), Bromopropylate (1239), Chinomethionat (1240), Cryolite (1241), Dicofol (1242), Diflovidazin (1243), Fluensulfone (1244), Flufenerim (1245), Flufiprole (1246), Fluopyram (1247), Fufenozide (1248), Imidaclothiz (1249), Iprodione (1250), Meperfluthrin (1251), Pyridalyl (1252), Pyrifluquinazon (1253), Tetramethylfluthrin (1254), and iodomethane (1255); furthermore products based on *Bacillus firmus* (including but not limited to strain CNCM I-1582, such as, for example, VOTiVO™, BioNem) (1256) or one of the following known active compounds: 3-bromo-N-{2-bromo-4-chloro-6-[(1-cyclopropylethyl)carbamoyl]phenyl}-1-(3-chloropyridin-2-yl)-1H-pyrazole-5-carboxamide (1257) (known from WO 2005/077934), 4-{[(6-bromopyridin-3-yl)methyl](2-fluoroethyl)amino}furan-2(5H)-one (1258) (known from WO 2007/115644), 4-{[(6-fluoropyridin-3-yl)methyl](2,2-difluoroethyl)amino}furan-2(5H)-one (1259) (known from WO 2007/115644), 4-{[(2-chloro-1,3-thiazol-5-yl)methyl](2-fluoroethyl)amino}furan-2(5H)-one (I260) (known from WO 2007/115644), 4-{[(6-chlorpyridin-3-yl)methyl](2-fluoroethyl)amino}furan-2(5H)-one (1261) (known from WO 2007/115644), Flupyradifurone (1262), 4-{[(6-chlor-5-fluoropyridin-3-yl)methyl](methyl)amino}furan-2(5H)-one (1263) (known from WO 2007/115643), 4-{[(5,6-dichloropyridin-3-yl)methyl](2-fluoroethyl)amino}furan-2(5H)-one (1264) (known from WO 2007/115646), 4-{[(6-chloro-5-fluoropyridin-3-yl)methyl](cyclopropyl)amino}furan-2(5H)-one (1265) (known from WO 2007/115643), 4-{[(6-chloropyridin-3-yl)methyl](cyclopropyl)amino}furan-2(5H)-one (1266) (known from EP-A-0 539 588), 4-{[(6-chlorpyridin-3-yl)methyl](methyl)amino}furan-2(5H)-one (1267) (known from EP-A-0 539 588), {[1-(6-chloropyridin-3-yl)ethyl](methyl)oxido-λ4-sulfanylidene}cyanamide (I268) (known from WO 2007/149134) and its diastereomers {[(1R)-1-(6-chloropyridin-3-yl)ethyl](methyl)oxido-λ4-sulfanylidene}cyanamide (A) (1269), and {[(1S)-1-(6-chloropyridin-3-yl)ethyl](methyl)oxido-λ4-sulfanylidene}cyanamide (B) (1270) (also known from WO 2007/149134) as well as diastereomers [(R)-methyl(oxido){(1R)-1-[6-(trifluoromethyl)pyridin-3-yl]ethyl}-λ4-sulfanylidene]cyanamide (A1) (1271), and [(S)-methyl(oxido){(1S)-1-[6-(trifluoromethyl)pyridin-3-yl]ethyl}-λ4-sulfanylidene]cyanamide (A2) (1272), referred to as group of diastereomers A (known from WO 2010/074747, WO 2010/074751), [(R)-methyl(oxido){(1S)-1-[6-(trifluoromethyl)pyridin-3-yl]ethyl}-λ4-sulfanylidene]cyanamide (B1) (1273), and [(S)-methyl(oxido){(1R)-1-[6-(trifluoromethyl)pyridin-3-yl]ethyl}-λ4-sulfanylidene]cyanamide (B2) (1274), referred to as group of diastereomers B (also known from WO 2010/074747, WO 2010/074751), and 11-(4-chloro-2,6-dimethylphenyl)-12-hydroxy-1,4-dioxa-9-azadispiro[4.2.4.2]tetradec-11-en-10-one (1275) (known from WO 2006/089633), 3-(4'-fluoro-2,4-dimethylbiphenyl-3-yl)-4-hydroxy-8-oxa-1-azaspiro[4.5]dec-3-en-2-one (1276) (known from WO 2008/067911), 1-{2-fluoro-4-methyl-5-[(2,2,2-trifluorethyl)sulfinyl]phenyl}-3-(trifluoromethyl)-1H-1,2,4-triazol-5-amine (1277) (known from WO 2006/043635), Afidopyropen [(3S,4aR,12R,12aS,12bS)-3-[(cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methyl cyclopropanecarboxylate (1278) (known from WO 2008/066153), 2-cyano-3-(difluoromethoxy)-N,N-dimethylbenzenesulfonamide (1279) (known from WO 2006/056433), 2-cyano-3-(difluoromethoxy)-N-methylbenzenesulfonamide (1280) (known from WO 2006/100288), 2-cyano-3-(difluoromethoxy)-N-ethylbenzenesulfonamide (I281) (known from WO 2005/035486), 4-(difluoromethoxy)-N-ethyl-N-methyl-1,2-benzothiazol-3-amine 1,1-dioxide (1282) (known from WO 2007/057407), N-[1-(2,3-dimethylphenyl)-2-(3,5-dimethylphenyl)ethyl]-4,5-dihydro-1,3-thiazol-2-amine (1283) (known from WO 2008/104503), {1'-[(2E)-3-(4-chlorophenyl)prop-2-en-1-yl]-5-fluorospiro[indole-3,4'-piperidin]-1(2H)-yl}(2-chloropyridin-4-yl)methanone (1284) (known from WO 2003/106457), 3-(2,5-dimethylphenyl)-4-hydroxy-8-methoxy-1,8-diazaspiro[4.5]dec-3-en-2-one (1285) (known from WO 2009/049851), 3-(2,5-dimethylphenyl)-8-methoxy-2-oxo-1,8-diazaspiro[4.5]dec-3-en-4-yl ethyl carbonate (1286) (known from WO 2009/049851), 4-(but-2-yn-1-yloxy)-6-(3,5-dimethylpiperidin-1-yl)-5-fluoropyrimidine (1287) (known from WO 2004/099160), (2,2,3,3,4,4,5,5-octafluoropentyl)(3,3,3-trifluoropropyl)malononitrile (1288) (known from WO 2005/063094), (2,2,3,3,4,4,5,5-octafluoropentyl)(3,3,4,4,4-pentafluorobutyl)malononitrile (1289) (known from WO 2005/063094), 8-[2-(cyclopropylmethoxy)-4-(trifluoromethyl)phenoxy]-3-[6-(trifluoromethyl)pyridazin-3-yl]-3-azabicyclo[3.2.1]octane (1290) (known from WO 2007/040280), Flometoquin (1291), PF1364 (CAS-Reg. No. 1204776-60-2) (1292) (known from JP 2010/018586), 5-[5-(3,5-dichlorophenyl)-5-(trifluoromethyl)-4,5-dihydro-1,2-oxazol-3-yl]-2-(1H-1,2,4-triazol-1-yl)benzonitrile (1293) (known from WO 2007/075459), 5-[5-(2-chloropyridin-4-yl)-5-(trifluoromethyl)-4,5-dihydro-1,2-oxazol-3-yl]-2-(1H-1,2,4-triazol-1-yl)benzonitrile (1294) (known from WO 2007/075459), 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (1295) (known from WO 2005/085216), 4-{[(6-chloropyridin-3-yl)methyl](cyclopropyl)amino}-1,3-oxazol-2(5H)-one (1296), 4-{[(6-chloropyridin-3-yl)methyl](2,2-difluoroethyl)amino}-1,3-oxazol-2(5H)-one (I297), 4-{[(6-chloropyridin-3-yl)methyl](ethyl)amino}-1,3-oxazol-2(5H)-one (1298), 4-{[(6-chloropyridin-3-yl)methyl](methyl)amino}-1,3-oxazol-2(5H)-one (1299) (all known from WO 2010/005692), Pyflubumide N-[4-(1,1,1,3,3,3-hexafluoro-2-methoxypropan-2-yl)-3-isobutylphenyl]-N-isobutyryl-1,3,5-trimethyl-1H-pyrazole-4-carboxamide (1300) (known from WO 2002/096882), methyl 2-[2-({[3-bromo-1-(3-chloropyridin-2-yl)-1H-pyrazol-5-yl]carbonyl}amino)-5-chloro-3-methylbenzoyl]-2-methylhydrazinecarboxylate (1301) (known from WO 2005/085216), methyl 2-[2-({[3-bromo-1-(3-chloropyridin-2-yl)-1H-pyrazol-5-yl]carbonyl}amino)-5-cyano-3-methylbenzoyl]-2-ethylhydrazinecarboxylate (1302) (known from WO 2005/085216), methyl 2-[2-({[3-bromo-1-(3-chloropyridin-2-yl)-1H-pyrazol-5-yl]carbonyl}amino)-5-cyano-3-methylbenzoyl]-2-methylhydrazinecarboxylate (1303) (known from WO 2005/085216), methyl 2-[3,5-dibromo-2-({[3-bromo-1-(3-chloropyridin-2-yl)-1H-pyrazol-5-yl]carbonyl}amino)benzoyl]-1,2-diethylhydrazinecarboxylate (1304) (known from WO 2005/085216), methyl 2-[3,5-dibromo-2-({[3-bromo-1-(3-chloropyridin-2-yl)-1H-pyrazol-5-yl]carbonyl}amino)benzoyl]-2-ethylhydrazinecarboxylate (1305) (known from WO 2005/085216), (5RS,7RS;5RS,7SR)-1-(6-chloro-3-pyridylmethyl)-1,2,3,5,6,7-hexahydro-7-methyl-8-nitro-5-propoxyimidazo[1,2-a]pyridine (1306) (known from WO 2007/101369), 2-{6-[2-(5-fluoropyridin-3-yl)-1,3-thiazol-5-yl]pyridin-2-yl}pyrimidine (1307) (known from WO 2010/006713), 2-{6-[2-(pyridin-3-yl)-1,3-thiazol-5-yl]pyridin-2-yl}pyrimidine (1308) (known from WO 2010/006713), 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide (1309) (known from WO 2010/069502), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (1310) (known from WO 2010/069502), N-[2-(tert-butylcarbamoyl)-4-cyano-6-methylphenyl]-1-(3-chloropyridin-2-yl)-3-{[5-(trifluoromethyl)-1H-tetrazol-1-yl]methyl}-1H-pyrazole-5-carboxamide (1311) (known from WO 2010/069502), N-[2-(tert-butylcarbamoyl)-4-cyano-6-methylphenyl]-1-(3-chloropyridin-2-yl)-3-{[5-(trifluoromethyl)-2H-tetrazol-2-yl]methyl}-1H-pyrazole-5-carboxamide (1312) (known from WO 2010/069502), (1E)-N-[(6-chloropyridin-3-yl)methyl]-N'-cyano-N-(2,2-difluoroethyl)ethanimidamide (1313) (known from WO 2008/009360), N-[2-(5-amino-1,3,4-thiadiazol-2-yl)-4-chloro-6-methylphenyl]-3-bromo-1-(3-chloropyridin-2-yl)-1H-pyrazole-5-carboxamide (1314) (known from CN 102057925), methyl 2-[3,5-dibromo-2-({[3-bromo-1-(3-chloropyridin-2-yl)-1H-pyrazol-5-yl]carbonyl}amino)benzoyl]-2-ethyl-1-methylhydrazinecarboxylate (1315) (known from WO 2011/049233) and (1316) pesticidal terpene mixtures comprising the three terpenes α-terpinene, p-cymene and limonene, and optionally minor terpene ingredients, including simulated natural pesticides comprising a mixture of three terpenes, i.e., α-terpinene, p-cymene and limonene sold as REQUIEM®. In a preferred embodiment of the present invention the insecticide is a synthetic insecticide. As used herein, the term "synthetic" defines a compound that has not been obtained from a biological control agent. Especially a synthetic insecticide or fungicide is no metabolite of the biological control agents according to the present invention.

According to a preferred embodiment of the present invention the insecticide is selected from the group consisting of Abamectin (I152), Acephate (127), Acetamiprid (1141), Acrinathrin (196), Alpha-Cypermethrin (I111), Beta-Cyfluthrin (1106), Bifenthrin (I100), Buprofezin (1202), Clothianidin (1142), Chlorantraniliprole (1231), Chlorfenapyr (1184), Chlorpyrifos (135), Carbofuran (18), Cyantraniliprole (1232), Cyenopyrafen (1229), Cyflumentofen (1230), Cyfluthrin (1105), Cypermethrin (I110), Deltamethrin (1116), Diafenthiuron (1178), Dinotefuran (1143), Emamectin-benzoate (1153), Ethiprole (194), Fenpyroximate (1213), Fipronil (195), Flometoquin (1291), Flubendiamide (1233), Fluensulfone (1244), Fluopyram (1247), Flupyradifurone (1262), Gamma-Cyhalothrin (1109), Imidacloprid (1144), Indoxacarb (1219), Lambda-Cyhalothrin (1108), Lufenuron (1197), Metaflumizone (1220), Methiocarb (115), Methoxyfenozide (1206), Milbemectin (1155), Profenofos (177), Pyflubumide (1300), Pyrifluquinazone (1253), Spinetoram (1150), Spinosad (1151), Spirodiclofen (1221), Spiromesifen (1222), Spirotetramate (1223), Sulfoxaflor (1149), Tebufenpyrad (1216), Tefluthrin (1134), Thiacloprid (1146), Thiamethoxam (1147), Thiodicarb (121), Triflumuron (1201), 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide (1309) (known from WO 2010/069502), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (1310) (known from WO 2010/069502) and 1-{2-fluoro-4-methyl-5-[(2,2,2-trifluorethyl)sulfinyl]phenyl}-3-(trifluoromethyl)-1H-1,2,4-triazol-5-amine (1277), Afidopyropen (1278).

In one embodiment of the present invention, the insecticide is selected from the group consisting of Abamectin (1152), *B. firmus* (1256), Carbofuran (18), Clothianidin (1142), Cyazypyr, Cycloxaprid, Cypermethrin (I110), Ethiprole (194), Fipronil (195), Fluopyram (1247), Imidacloprid (1144), Methiocarb (115), Rynaxypyr, Spinosad (1151), Sulfoxaflor (1149), Tefluthrin (1134), Thiametoxam (1147), Thiodicarb (121).

In another embodiment of the present invention, the insecticide is selected from the group consisting of Methiocarb (115), Thiodicarb (121), Fipronil (195), β-Cyfluthrin (1105), Tefluthrin (1134), Clothianidin (1142), Imidacloprid (1144), Thiacloprid (1146), Sulfoxaflor (1149), Spinetoram (1150), Spinosad (1151), Chlorantraniliprole (1231), Cyantraniliprole (1232), Flubendiamide (1233), 1-{2-fluoro-4-methyl-5-[(2,2,2-trifluorethyl)sulfinyl]phenyl}-3-(trifluoromethyl)-1H-1,2,4-triazol-5-amine (I277), 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide (I310),

In a preferred embodiment the method according to the present invention comprises applying one of the following combinations wherein *Bacillus subtilis* QST713 and/or metabolites produced therefrom are designated "B1":
B1+I1, B1+I2, B1+I3, B1+I4, B1+I5, B1+I6, B1+I7, B1+I8, B1+I9, B1+B10, B1+I11, B1+I12, B1+I13, B1+I14, B1+I15, B1+I16, B1+I17, B1+I18, B1+I19, B1+I20, B1+I21, B1+ 122, B1+I23, B1+I24, B1+I25, B1+I26, B1+I27, B1+I28, B1+I29, B1+I30, B1+I31, B1+I32, B1+I33, B1+I34, B1+I35, B1+I36, B1+I37, B1+I38, B1+I39, B1+I40, B1+I41, B1+I42, B1+I43, B1+I44, B1+I45, B1+I46, B1+I47, B1+I48, B1+I49, B1+I50, B1+I51, B1+I52, B1+I53, B1+I54, B1+I55, B1+I56, B1+I57, B1+I58, B1+I59, B1+I60, B1+I61, B1+ I62, B1+I63, B1+I64, B1+I65, B1+I66, B1+I67, B1+I68, B1+I69, B1+I70, B1+I71, B1+I72, B1+I73, B1+I74, B1+I75, B1+I76, B1+I77, B1+I78, B1+I79, B1+I80, B1+I81, B1+I82, B1+I83, B1+I84, B1+I85, B1+I86, B1+I87, B1+I88, B1+I89, B1+I90, B1+I91, B1+I92, B1+I93, B1+I94, B1+I95, B1+I96, B1+I97, B1+I98, B1+I99, B1+I100, B1+I101, B1+I102, B1+I103, B1+I104, B1+I105, B1+I106, B1+I107, B1+I108, B1+I109, B1+I110, B1+I111, B1+I112, B1+I113, B1+I114, B1+I115, B1+I116, B1+I117, B1+I118, B1+I119, B1+I120, B1+I121, B1+I122, B1+I123, B1+I124, B1+I125, B1+I126, B1+I127, B1+I128, B1+I129, B1+I130, B1+I131, B1+I132, B1+I133, B1+I134, B1+I135, B1+I136, B1+I137, B1+I138, B1+I139, B1+I140, B1+I141, B1+I142, B1+I143, B1+I144, B1+I145, B1+I146, B1+I147, B1+I148, B1+I149, B1+I150, B1+I151, B1+I152, B1+I153, B1+I154, B1+I155, B1+I156, B1+I157, B1+I158, B1+I159, B1+I160, B1+I161, B1+I162, B1+I163, B1+I164, B1+I165, B1+I166, B1+I167, B1+I168, B1+I169, B1+I170, B1+I171, B1+I172, B1+I173, B1+I174, B1+I175, B1+I176, B1+I177, B1+I178, B1+I179, B1+I180, B1+I181, B1+I182, B1+I183, B1+I184, B1+I185, B1+I186, B1+I187, B1+I188, B1+I189, B1+I190, B1+I191, B1+I192, B1+I193, B1+I194, B1+I195, B1+I196, B1+I197, B1+I198, B1+I199, B1+I200, B1+I201, B1+I202, B1+I203, B1+I204, B1+I205, B1+I206, B1+I207, B1+I208, B1+I209, B1+I210, B1+I211, B1+I212, B1+I213, B1+I214, B1+I215,B1+I216, B1+I217, B1+I218, B1+I219, B1+I220, B1+I221, B1+I222, B1+I223, B1+I224, B1+I225, B1+I226, B1+I227, B1+I228, B1+I229, B1+I230, B1+I231, B1+I232, B1+I233, B1+I234, B1+I235, B1+I236, B1+I237, B1+I238, B1+I239, B1+I240, B1+I241, B1+I242, B1+I243, B1+I244, B1+I245, B1+I246, B1+I247, B1+I248, B1+I249, B1+I250, B1+I251, B1+I252, B1+I253, B1+I254, B1+I255, B1+I256, B1+I257, B1+I258, B1+I259, B1+I260, B1+I261, B1+I262, B1+I263, B1+I264, B1+I265, B1+I266, B1+I267, B1+I268, B1+I269, B1+I270, B1+I271, B1+I272, B1+I273, B1+I274, B1+I275, B1+I276, B1+I277, B1+I278, B1+I279, B1+I280, B1+I281, B1+I282, B1+I283, B1+I284, B1+I285, B1+I286, B1+I287, B1+I288, B1+I289, B1+I290, B1+I291, B1+I292, B1+I293, B1+I294, B1+I295, B1+I296, B1+I297, B1+I298, B1+I299, B1+I300, B1+I301, B1+I302, B1+I303, B1+I304, B1+I305, B1+I306, B1+I307, B1+I308, B1+I309, B1+I310, B1+I311, B1+I312, B1+I313, B1+I314, B1+I315, B1+I316;

Preferably, the method according to the present invention comprises applying a combination selected from the group consisting of:
B1+I8, B1+I15, B1+I21, B1+I27, B1+I35, B1+I77, B1+I94, B1+I95, B1+I96, B1+I100, B1+I105, B1+I106, B1+I108, B1+I109, B1+I110, B1+I111, B1+I116, B1+I134, B1+I141, B1+I142, B1+I143, B1+I144, B1+I146, B1+I147, B1+I149, B1+I150, B1+I151, B1+I152, B1+I153, B1+I155, B1+I178, B1+I184, B1+I197, B1+I201, B1+I202, B1+I206, B1+I213, B1+I213, B1+I216, B1+I219, B1+I220, B1+I221, B1+I222, B1+I223, B1+I229, B1+I230, B1+I231, B1+I232, B1+I233, B1+I244, B1+I253, B1+I262, B1+I272, B1+I277, B1+I278, B1+I291, B1+I300, B1+I309, B1+I310.

In a more preferred embodiment, the method according to the present invention comprises applying a combination selected from the group consisting of:
B1+I15, B1+I21, B1+I95, B1+I105, B1+I134, B1+I142, B1+I144, B1+I146, B1+I149, B1+I150, B1+I151, B1+I231, B1+I232, B1+I233, B1+I277, B1+I310.

In a highly preferred embodiment the present invention relates to a method comprising applying *Bacillus subtilis* and/or metabolites produced therefrom and at least one insecticide selected from the group consisting of Abamectin, Acephate, Acetamiprid, Acrinathrin, Alpha-Cypermethrin, Beta-Cyfluthrin, Bifenthrin, Buprofezin, Clothianidin, Chlorantraniliprole, Chlorfenapyr, Chlorpyrifos, Carbofuran, Cyantraniliprole, Cyenopyrafen, Cyflumentofen, Cyfluthrin, Cypermethrin, Deltamethrin, Diafenthiuron, Dinotefuran, Emamectin-benzoate, Ethiprole, Fenpyroximate, Fipronil, Flometoquin, Flubendiamide, Fluensulfone, Fluopyram, Flupyradifurone, Gamma-Cyhalothrin, Imidacloprid, Indoxacarb, Lambda-Cyhalothrin, Lufenuron, Metaflumizone, Methiocarb, Methoxyfenozide, Milbemectin, Profenofos, Pyflubumide, Pyrifluquinazone, Spinetoram, Spinosad, Spirodiclofen, Spiromesifen, Spirotetramate, Sulfoxaflor, Tebufenpyrad, Tefluthrin, Thiacloprid, Thiamethoxam, Thiodicarb, Triflumuron, 1-(3-chloropyridin-2-yl)-N-[4-cyano-2-methyl-6-(methylcarbamoyl)phenyl]-3-{[5-(trifluoromethyl)-1H-tetrazol-1-yl]methyl}-1H-pyrazole-5-carboxamide, 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide, 1-{2-fluoro-4-methyl-5-[(2,2,2-trifluorethyl)sulfinyl]phenyl}-3-(trifluoromethyl)-1H-1,2,4-triazol-5-amine and Afidopyropen in a synergistically effective amount.

According to one embodiment of the present invention preferred insecticides are selected from the group consisting of
acetamiprid, aldicarb, amitraz, beta-cyfluthrin, carbaryl, clothianidin, cyfluthrin, cypermethrin, deltamethrin, endosulfan, ethion, ethiprole, ethoprophos, fenamiphos, fenobucarb, fenthion, fipronil, flubendiamide, fluopyram, formetanate, heptanophos, imidacloprid, methamidophos, methiocarb, methomyl, niclosamide, oxydemeton-methyl, phosalone, silafluofen, spirodiclofen, spiromesifen, spirotetramat, thiacloprid, thiodicarb, tralomethrin, triazophos, triflumuron, vamidothion, 1-{2-fluoro-4-methyl-5-[(R)-(2,2,2-tiifluoroethyl)sulphinyl]phenyl}-3-(trifluoromethyl)-1H-1,2,4-triazol-5-amine, and 1-(3-chloropyridin-2-yl)-N-[4-cyano-2-methyl-6-(methylcarbamoyl)phenyl]-3-{[5-(trifluoromethyl)-2H-tetrazol-2-yl]methyl}-1H-pyrazole-5-carboxamide and pesticidal terpene mixtures comprising the three terpenes α-terpinene, p-cymene and limonene, and optionally minor terpene ingredients, including simulated natural pesticides comprising a mixture of three terpenes, i.e. α-terpinene, p-cymene and limonene sold as REQUIEM®.

In a preferred embodiment of the present invention the insecticide is a synthetic insecticide. As used herein, the term "synthetic" defines a compound that has not been obtained from a biological control agent. Especially a synthetic insecticide or fungicide is no metabolite of the biological control agents according to the present invention.

According to a preferred embodiment of the present invention the insecticide is selected from the group consisting of chlorpyrifos, clothianidin, cypermethrin, ethiprole, fipronil, fluopyram, imidacloprid, methiocarb, and thiodicarb.

Methods for applying or treating the compositions and strains of the present invention onto plant propagation material, especially seeds, are known in the art, and include dressing, coating, pelleting and soaking application methods of the propagation material.

In some embodiments, the application methods according to the invention part for the protection of a plant propagation material, which, in accordance with the invention, is any plant material capable of developing complete plants after planting or sowing to the site of planting or sowing, for example seedlings, rhizomes, nursery plants, cuttings or, in particular, seed (seeds), such as fruits, tubers, kernels or bulbs, against attack by pests are characterized in that, for example, suitable compositions are applied in such a manner that they are applied in close spatial proximity to, or spatially together with, planting or sowing the propagation material to the site of planting or sowing. Application of these compositions in close spatial proximity to planting or sowing the propagation material to the site of planting or sowing takes place in accordance with the invention, preferably prior to planting or sowing the propagation material, by applying the compositions by soil application directly to the site where the propagation material has been planted or sown, for example preferably prior to sowing into the seed furrow or to a closely delimited area around the site of planting or sowing the propagation material. Application of such compositions, which takes place spatially together with planting or applying the propagation material to the site of planting or sowing is to be understood as meaning that propagation material which has been pretreated with these compositions is planted or sown at the site of planting or sowing, it being possible, depending on the intended aims and prevailing circumstances, for the pretreatment of the propagation material to be effected for example by spraying, atomizing, dusting or scattering the compositions over the propagation material or brushing or pouring the compositions over the propagation material or, in the event of seed, in particular also by dressing the seed. When carrying out seed dressing, i.e., dry seed, wet seed-dressing, liquid seed-dressing or slurry dressing, the *Bacillus subtilis, Bacillus pumilus,* and/or metabolites produced therefrom are added to the seed prior to sowing in a seed-dressing apparatus and the composition is distributed uniformly over the seed, for example by stirring the contents of the seed-dressing apparatus and/or by rotating and/or shaking the entire seed-dressing apparatus. Particular embodiments of such a seed-dressing treatment comprise, for example, immersing the seed in a liquid composition, coating the seed with a solid composition (seed coating) or by achieving penetration of the active ingredient into the seed by adding the composition to the water used for pre-soaking the seed (seed soaking).

The compositions and strains used in the present invention can be applied to the seeds using conventional treating techniques and machines, such as fluidized bed techniques, the roller mill method, rotostatic seed treaters, and drum coaters. Other methods, such as spouted beds may also be useful. The seeds may be pre-sized before coating. After coating, the seeds are typically dried and then transferred to a sizing machine for sizing. Such sizing and treating procedures are known in the art.

In one embodiment, the compositions and strains used in the present invention can be applied or treated on to the plant propagation material by a method such that the germination is not induced; generally seed soaking induces germination because the moisture content of the resulting seed is too high. Accordingly, examples of suitable methods for applying (or treating) plant propagation material, such as a seed, are seed dressing, seed coating or seed pelleting and the like.

In a typical embodiment, the plant propagation material is seed. Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed according to techniques understood by those skilled in the art either before or after the treatment.

Even distribution of the active ingredients and adherence thereof to the seeds is desired during propagation material treatment. Treatment could vary from a thin film (dressing) of the formulation containing the compositions and strains of the present invention on a plant propagation material, such as a seed, where the original size and/or shape are recognizable to an intermediary state (such as a coating) and then to a thicker film (such as pelleting) with many layers of different materials (such as carriers, for example, clays; different formulations, such as of other active ingredients; polymers; and colorants) where the original shape and/or size of the seed is no longer recognizable.

In some embodiments, the seed treatment occurs to an unsown seed. The term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil, but would include any application practice that would target the seed during the planting process.

In some embodiments, treatment occurs before sowing of the seed so that the sown seed has been pre-treated with the compositions and strains of the present invention. In particular, seed coating or seed pelleting are preferred in the treatment with the compositions and strains described herein. As a result of the treatment, the compositions and strains of the present invention are adhered on to the surface of the seed and therefore available for pest and/or disease control.

The treated seeds can be stored, handled, sowed and tilled in the same manner as any other active ingredient treated seed.

*Ceratocystis paradoxa* is also known as *Chalara paradoxa* and *Thielaviopsis paradoxa*[anamorph]. Throughout this patent application the terms *"Ceratocystis paradoxa"* and *"Thielaviopsis paradoxa"* are used interchangeably.

*Ceratocystis* is an important genus of plant pathogens and causes maj or diseases of trees. *C. paradoxa* causes pineapple disease of sugarcane, and diseases of pineapple, banana, cacao, coconut and oil palm. Pineapple disease is economically important and occurs in almost all sugarcane-growing countries. It is a disease of setts and induces seed piece decay following planting. The rotting seed pieces smell like ripe pineapple due to production of ethyl acetate produced by fungus. The pathogen enters through the cut ends of the setts, and destroys parenchymatous tissues of internode. It retards bud germination, and shoot development thereby affecting early shoot vigor. Infected setts turn from red to brownish black-due to the production of fungal spores. These spores are released into the soil upon seed piece decay and serve as a source of inoculum for the next crop. Sometimes the disease occurs in a standing crop because pathogen enters through the injured stalks caused by prior pest attack. The disease is essentially soilborne, and is transmitted by the fungal spores present mainly in the top 25 cm of the soil. Deep planting, wet or dry soil conditions, low temperatures, short or long hot-water treatments (used to control other diseases) increase susceptibility.

In some embodiments, strains and compositions used in the present invention are applied at a rate of about 1 x 10² to about 1 x 10⁷ cfu/seed, depending on the size of the seed. In some embodiments, the application rate is about 1 x 10³ to about 1 x 10⁶ cfu per seed.

When used as a soil treatment, the compositions used in the present invention can be applied as a soil surface drench, shanked-in, injected and/or applied in-furrow or by mixture with irrigation water. The rate of application for drench soil treatments, which may be applied at planting, during or after seeding, or after transplanting and at any stage of plant growth, is typically about 4 x 10¹¹ to about 1 x 10¹³ cfu per acre. In some embodiments, the rate of application is about 4 x 10¹¹ to about 8 x 10¹² cfu per acre. In some embodiments, the rate of application is about 4 x 10¹¹ to about 1 x 10¹² cfu per acre. The rate of application for in-furrow treatments, applied at planting, is about 1 x 10¹⁰ to about 1 x 10¹² cfu per 1000 row feet. In some embodiments, the rate of application is about 5 x 10¹⁰ to about 7.5 x 10¹¹ cfu per 1000 row feet. In other embodiments, the rate of application is about 1 x 10¹⁰ cfu per 1000 row feet to about 5 x 10¹¹ cfu per 1000 row feet.

In certain aspects, the compositions used in the present invention are applied to the cut billets (i.e., seeding sets or sugarcane propagation material) as a spray directed through multiple nozzles to ensure that the entire billet piece is covered, especially the cut ends where the pathogen enters, prior to contact with the soil. This may be done on the shoot of the planter as the billets are being fed through. In one embodiment, the water volume is enough to be able to effectively wet all the surface of the planting material (about 500-800 L/ha depending on the amount of billets being planted per hectare).

### EXAMPLES

### Example 1. Control of Pineapple Disease with Bacillus subtilis QST713

A field trial was conducted to determine if SERENADE® ASO (*Bacillus subtilis* QST713 at a minimum CFU/g of 1 × 10⁹) applied as a set spray controls pineapple disease of sugarcane similar to the chemical fungicide SHIRTAN® (methoxy ethyl mercuric chloride) and to evaluate any phytotoxicity of SERENADE® ASO (*Bacillus subtilis* QST713) on sugarcane when applied at planting.

Treated plots of sugarcane were two rows by about 130 meters. The untreated plot of sugarcane was a single row for comparison. SERENADE® ASO (*Bacillus subtilis* QST713) was applied in furrow at planting in a manner to give maximum coverage to cut sets. A motorized backpack sprayer was affixed to the planter and set up at 100 kPa to deliver 7.9 L/100m-row of the SERENADE® ASO (*Bacillus subtilis* QST713) concentrate diluted in water. The application rate of concentrate was 135 mL/100m-row. The standard SHIRTAN® (methoxy ethyl mercuric chloride) was applied at planting to cut sugarcane setts with a PTO pump as per normal practice. SHIRTAN® (methoxy ethyl mercuric chloride) was applied at a rate of 125 mL/100 L water.

Sugarcane shoot emergence was evaluated at 21 days after planting (DAP), 35 DAP, and 92 DAP. The numbers of emerged shoots were counted in 10-meter lengths within plots, and five or six individual assessments per plot were reported. The average number of shoots emerged per 10 meters for each treatment group is shown in **Table 1.**

**Table 1. Sugarcane shoot emergence per 10 meters evaluated at 21 DAP, 35 DAP, and 92 DAP.**

| **Treatment** | **Average Number of Emerged Shoots 21 DAP** | **Average Number of Emerged Shoots 35 DAP** | **Average Number of Emerged Shoots 92 DAP** |
|---|---|---|---|
| Untreated Control | 7 | 32 | 36 |
| SHIRTAN® | 11 | 45 | 43 |
| SERENADE® ASO | 14 | 44 | 44 |

The disease present in the plots was confirmed by lab analysis to be pineapple disease caused by *C. paradoxa.* Application of SERENADE® ASO *(Bacillus subtilis* QST713) to the sugarcane did not result in any significant phytotoxicity to the plants. As shown in **Table 1,** the control of pineapple disease achieved with SERENADE® ASO *(Bacillus subtilis* QST713) was similar to that observed with the standard chemical fungicide SHIRTAN® (methoxy ethyl mercuric chloride). The efficacy of SERENADE® ASO *(Bacillus subtilis* QST713) in promoting shoot emergence and protecting the sugarcane from pineapple disease was consistent across each of the three time points when assessments were performed.

### Example 2. Control of Pineapple Disease with Lower Application Rates of Bacillus subtilis QST713

Another field trial was conducted to determine if SERENADE® ASO (*Bacillus subtilis* QST713 at a minimum CFU/g of 1 × 10⁹) applied as a set spray at lower application rates than that used in Example 1 controls pineapple disease of sugarcane similar to the chemical fungicide SHIRTAN® (methoxy ethyl mercuric chloride).

The field trial was set up similarly to that described in Example 1 except that SERENADE® ASO *(Bacillus subtilis* QST713) concentrate diluted in water was applied at 30 mL/100m-row and 65 mL/100m-row.

Four weeks after planting, cane emergence was counted in 20 m or 30 m sections, and the average number of emerged shoots per meter from three independent replicates is reported in **Table 2.**

**Table 2. Average sugarcane shoot emergence per meter evaluated at 4 weeks after planting.**

| **Treatment** | **Average Number of Emerged Shoots per Meter** |
|---|---|
| Untreated Control | 7.3 |
| SHIRTAN® | 8.8 |
| SERENADE® ASO (30 mL/100m-row) | 8.9 |
| SERENADE® ASO (65 mL/100m-row) | 8.6 |

The control of pineapple disease achieved with SERENADE® ASO (*Bacillus subtilis* QST713) at the lowest rate of 30 mL/100m-row was similar to that observed with the standard chemical fungicide SHIRTAN® (methoxy ethyl mercuric chloride).

### Example 3. Sugarcane Emergence with Bacillus subtilis QST713 in Combination with an Insecticide

Another field trial similar to those in Examples 1 and 2 was conducted with SERENADE® ASO *(Bacillus subtilis* QST713 at a minimum CFU/g of 1 × 10⁹) applied at 30 mL/100m-row (3.33 L/ha), 65 mL/100m-row (7.22 L/ha), 100 mL/100m-row (11.1 L/ha), or 135 mL/100m-row (15.00 L/ha). SHIRTAN® (methoxy ethyl mercuric chloride) was applied at a rate of 125 mL/100 L water. LORSBAN® 500 EC (chlorpyrifos) was applied with the SERENADE® ASO or SHIRTAN® at a rate of 4 L/100 L water at planting. Relatively high pineapple disease pressure was present in the field where this trial was conducted.

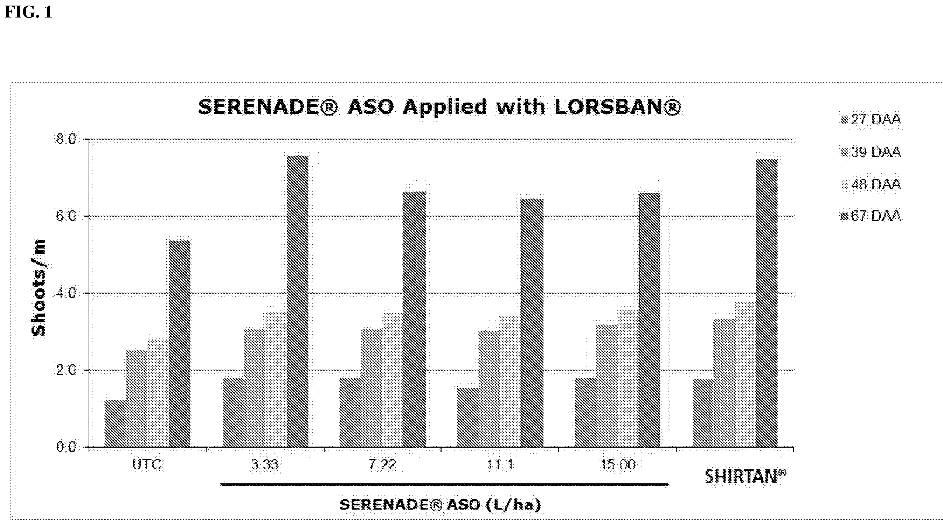

27 days after application (DAA), 39 DAA, 48 DAA, and 67 DAA the average number of emerged shoots per meter was evaluated, and the results are shown in **FIG. 1****.** SERENADE® ASO *(Bacillus subtilis* QST713) consistently performed as wells as the chemical standard across each of the application rates tested.

### Example 4. Evaluation of Inhibition of Mycelial Growth of C. paradoxa by Bacillus subtilis QST713 and Bacillus pumilus QST2808

To assess the inhibition of mycelial growth of *C*. *paradoxa* by *Bacillus subtilis* QST713 or *Bacillus pumilus* QST2808 (not part of the claimed invention) a study was designed to measure the zone of inhibition on Petri dishes with co-cultures of *C*. *paradoxa* and each *Bacillus* strain. 0.5 cm diameter disks containing colonies of each *Bacillus* strain were placed at one end of potato dextrose agar (PDA) plates. After two days incubation of these plates at a temperature of 25° C, discs containing the *C. paradoxa* pathogen were placed at the opposite end. A control PDA plate contained only the *C. paradoxa* pathogen. The experimental design was completely randomized with seven replications. Evaluations of the zones of inhibition were made four days after the pathogen discs were placed on the PDA plates.

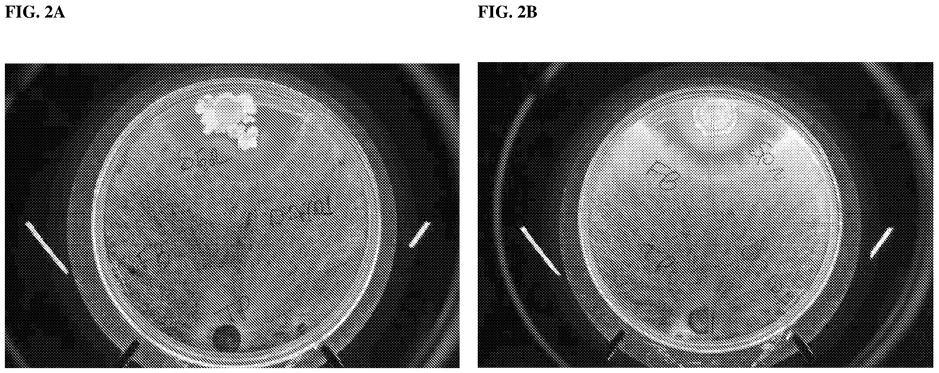

*Bacillus subtilis* QST713 and *Bacillus pumilus* QST2808 each showed an inhibitory effect on mycelial growth of *C*. *paradoxa* demonstrated by the formation of a zone of inhibition of fungal growth around the disks containing each *Bacillus* strain (see **FIG. 2** and **Table 3).** The control PDA plate with only the *C. paradoxa* pathogen was completely covered with mycelial growth.

**Table 3. Zone of inhibition (cm) between the Bacillus strains of and the C. paradoxa pathogen after four days.**

| **Treatment** | ***Bacillus* Strain** | **Zone of Inhibition (cm)** |
|---|---|---|
| 1 | Control (no *Bacillus* strain) | 0 |
| 2 | *Bacillus subtilis* QST713 | 2.2 |
| 3 | *Bacillus pumilus* QST2808 | 2.2 |

### Example 5. Inhibition of Pathogen Growth by Compounds in SERENADE® ASO (Bacillus subtilis QST713) and SONATA® (Bacillus pumilus QST2808)

Formulated SERENADE® ASO (1.34% *Bacillus subtilis* QST713 with a minimum of 1 x 10⁹ CFU/g) and SONATA® (1.38% *Bacillus pumilus* QST2808 with a minimum of 1 x 10⁹ CFU/g) were heat sterilized to eliminate the action of live bacteria and evaluate only the direct action of heat stable compounds present in each product. SERENADE® ASO *(Bacillus subtilis* QST713) or SONATA® *(Bacillus pumilus* QST2808) was added to PDA medium to final concentrations of 0%; 0.001%; 0.01%; 0.1%; 1% or 10%. The PDA media was then autoclaved at 120° C for 20 minutes. After autoclaving, the PDA media with SERENADE® ASO *(Bacillus subtilis* QST713) or SONATA® *(Bacillus pumilus* QST2808) were poured into Petri dishes and allowed to solidify at room temperature. Discs containing the *C. paradoxa* pathogen were then placed in the center of each plate and incubated at 25° C. Four days after placing the discs on the plates, the diameter of pathogen growth was measured. The experimental design was completely randomized with seven replications.

The average inhibition of pathogen growth at each concentration of SERENADE® ASO *(Bacillus subtilis* QST713) or SONATA® *(Bacillus pumilus* QST2808) is indicated in **Table 4**. SERENADE® ASO *(Bacillus subtilis* QST713) at concentrations of 10% and 1% in the PDA medium completely inhibited mycelial growth of the pathogen. A dose response was observed with lower concentrations of SERENADE® ASO *(Bacillus subtilis* QST713). SONATA® *(Bacillus pumilus* QST2808) inhibited mycelial growth only at the 10% and 1% concentrations. The *C. paradoxa* pathogen was more sensitive to the heat stable compounds in SERENADE® ASO *(Bacillus subtilis* QST713) than to those compounds in SONATA® *(Bacillus pumilus* QST2808).

**Table 4. Average diameter of C. paradoxa growth in PDA medium containing different concentrations of heat-sterilized SERENADE® ASO (Bacillus subtilis QST713) or SONATA® (Bacillus pumilus QST2808).**

| **Treatment** | ***Bacillus* Strain** | **Concentration in PDA (%)** | **Diameter of Pathogen Growth (cm)*** |
|---|---|---|---|
| 1 | Untreated Control | 0 | 8.5 a |
| 2 | *Bacillus subtilis* QST713 | 0.001 | 8.5 a |
| 3 | *Bacillus subtilis* QST713 | 0.01 | 2.8 c |
| 4 | *Bacillus subtilis* QST713 | 0.1 | 1.9 d |
| 5 | *Bacillus subtilis* QST713 | 1 | 0.0 e |
| 6 | *Bacillus subtilis* QST713 | 10 | 0.0 e |
| 7 | *Bacillus pumilus* QST2808 | 0.001 | 8.5 a |
| 8 | *Bacillus pumilus* QST2808 | 0.01 | 8.5 a |
| 9 | *Bacillus pumilus* QST2808 | 0.1 | 8.5 a |
| 10 | *Bacillus pumilus* QST2808 | 1 | 5.5 b |
| 11 | *Bacillus pumilus* QST2808 | 10 | 1.7 d |

| | | | |
|---|---|---|---|
| *For the analysis of variance the data were transformed into √X + 0.5. Averages followed by the same letter do not differ by Tukey's test at 5% probability. | | | |

### Example 6. Yield Effect of SERENADE® ASO (Bacillus subtilis QST713) and SONATA® (Bacillus pumilus QST2808) under Natural Pathogen Pressure

A field trial was carried out in which both *C. paradoxa* and *Fusarium* were naturally present in the soil. Sugarcane was treated with SERENADE® ASO *(Bacillus subtilis* QST713) or SONATA® *(Bacillus pumilus* QST2808) alone or in combination with PRIORIXTRA® (azoxystrobin + cyproconazole) as shown in **Table 5.**

The RB92579 variety of sugarcane was planted with a mechanical planter in a spacing of 1.5 m furrows. Seedlings of 40 cm in length and containing three to four buds each were prepared in a plant nursery and used for the field trial. The seedlings were planted in furrows with 18 to 20 buds/m groove. The experimental design was a randomized block design with four replications. The treatments were applied to the seedlings and surrounding soil with a backpack sprayer.

At harvest time, all lines were harvested from each plot with a mechanical harvester, and the billets were weighed. The weight measurements were converted to tons of millable cane (stalk) per hectare (TMH). Samples of billets from each plot were removed, placed in plastic bags, and taken to the laboratory for measurement of total recoverable sugar (TRS) expressed in kg/ton, which corresponds to the amount of sugar available in the feedstock minus losses in the industrial process. These two parameters were then used to calculate the tons of sugar per hectare (TSH) with the following formula: TSH = TMH × TRS/1000. The TMH and TSH values for sugarcane from each treatment group are reported in **Table 6.**

**Table 5. Application rates used in field trials for the formulated SERENADE® ASO (Bacillus subtilis QST713), SONATA® (Bacillus pumilus QST2808), and PRIORIXTRA® (azoxystrobin + cyproconazole).**

| **Treatment** | **Active Ingredient (AI)** | **AI Concentration (g/L)** | **AI Formulation*** | **Application Rates (g/ha) (L/ha)** | |
|---|---|---|---|---|---|
| 1 | *Bacillus pumilus* QST2808 | 14.35 | SC | 28.70 | 2.0 |
| 2 | *Bacillus pumilus* QST2808 | 14.35 | SC | 57.40 | 4.0 |
| 3 | *Bacillus pumilus* QST2808 | 14.35 | SC | 114.80 | 8.0 |
| 4 | *Bacillus subtilis* QST713 | 13.68 | SC | 27.36 | 2.0 |
| 5 | *Bacillus subtilis* QST713 | 13.68 | SC | 54.72 | 4.0 |
| 6 | *Bacillus subtilis* QST713 | 13.68 | SC | 109.44 | 8.0 |
| 7 | *Bacillus pumilus* QST2808 + Azoxystrobin + Cyproconazole | 14.35 + (200+80) | SC + SC | 28.70 + (50.0+2 0.0) | 2.0 + 0.25 |
| 8 | *Bacillus subtilis* QST713 + Azoxystrobin + Cyproconazole | 13.68 + (200+80) | SC + SC | 27.36 + (50.0+2 0.0) | 2.0 + 0.25 |
| 9 | Azoxystrobin + Cyproconazole | (200+80) | SC | (50.0+2 0.0) | 0.25 |
| 10 | Untreated Control | - | - | - | - |

| | | | | | |
|---|---|---|---|---|---|
| * SC: suspension concentrate | | | | | |

**Table 6. Tons of millable cane (stalk) per hectare (TMH), tons of sugar per hectare (TSH), and percent difference in TSH from untreated control (Δ% - TSH) in sugarcane treated with SERENADE® ASO (Bacillus subtilis QST713) or SONATA® (Bacillus pumilus QST2808) alone or in combination with PRIORIXTRA® (azoxystrobin + cyproconazole).**

| **Treatment** | ***Bacillus* Strain** | **TMH** | **TSH** | **Δ% - TSH** |
|---|---|---|---|---|
| 1 | *Bacillus pumilus* QST2808 2.0 L/Ha | 156.17 * | 20.94 * | + 18.50 |
| 2 | *Bacillus pumilus* QST2808 4.0 L/Ha | 144.37 * | 17.99 * | + 1.81 |
| 3 | *Bacillus pumilus* QST2808 8.0 L/Ha | 144.98 * | 20.06 * | + 13.52 |
| 4 | *Bacillus subtilis* QST713 2.0 L/Ha | 141.04 * | 19.65 * | + 11.20 |
| 5 | *Bacillus subtilis* QST713 4.0 L/Ha | 131.05 * | 18.12 * | + 2.54 |
| 6 | *Bacillus subtilis* QST713 8.0 L/Ha | 131.96 * | 18.95 * | + 7.24 |
| 7 | *Bacillus pumilus* QST2808 2.0 L/Ha + Azoxystrobin + Cyproconazole 0.25 L/Ha | 150.12 * | 19.46 * | + 10.13 |
| 8 | *Bacillus subtilis* QST713 2.0 L/Ha + Azoxystrobin + Cyproconazole 0.25 L/Ha | 128.03 ns | 17.79 * | + 0.67 |
| 9 | Azoxystrobin + Cyproconazole 0.25 L/Ha | 147.70 * | 21.07 * | + 19.24 |
| 10 | Untreated Control | 128.03 | 17.67 | |

| | | | | |
|---|---|---|---|---|
| * Statistically different from untreated control; ns: no statistical difference from untreated control. Statistical differences were determined by the Scott-Knott test. | | | | |

Under conditions of naturally occurring pathogen pressure, each of the treatments except treatment 8 resulted in a statistically significant yield increase as indicated by both TMH and TSH. SONATA® *(Bacillus pumilus* QST2808) applied alone at 2.0 L/ha was particularly effective and produced a yield increase similar to that observed with the chemical standard (i.e., azoxystrobin + cyproconazole).

### Example 7. Antifungal Activity of SERENADE® ASO (Bacillus subtilis QST713) Compared to RHIZOMAX® (Bacillus subtilis rm303)

A field trial was carried out in which *Ceratocystis paradoxa* (Stalk Rot or Pineapple Disease) was naturally present in the soil. At planting prior to contacting the soil, each group of sugar cane seeding sets was thoroughly sprayed with one of the following commercial products diluted in water: SERENADE® ASO *(Bacillus subtilis* QST713), RHIZOMAX® *(Bacillus subtilis* rm303), or TILT® 250 EC (propiconazole). SERENADE® ASO (*Bacillus subtilis* QST713) was applied at 15, 30, 60, or 135 milliliters product per 100 meters of row (mL/100 row-m), and RHIZOMAX® *(Bacillus subtilis* rm303) was applied at 150 mL/100 row-m. TILT® 250 EC (propiconazole) was applied at 20 milliliters product per 100 liters mix (mL/100 L) and was included as a control treatment with a synthetic fungicide.

The average shoot emergence per meter was determined at 15 days after application (DAA), 21 DAA, 35 DAA, 84 DAA, and 140 DAA (see **Table 7).** As application rates of SERENADE® ASO *(Bacillus subtilis* QST713) increased a greater number of emerged shoots resulted with the largest effects observed at application rates of 60 mL/100 row-m and 135 mL/100 row-m. In this field trial and other related trials, SERENADE® ASO *(Bacillus subtilis* QST713) demonstrated more consistent control of *Ceratocystis paradoxa* (Stalk Rot or Pineapple Disease) than did RHIZOMAX® *(Bacillus subtilis* rm303).

**Table 7. Shoot emergence per meter in sugar cane treated at planting with SERENADE® ASO (Bacillus subtilis QST713), RHIZOMAX® (Bacillus subtilis rm303), or TILT® 250 EC (propiconazole).**

| **Treatment** | **Shoot Emergence per Meter*** | | | | | | | | | |
|---|---|---|---|---|---|---|---|---|---|---|
| | **15 DAA** | | **21 DAA** | | **35 DAA** | | **84 DAA** | | **140 DAA** | |
| Untreated Control | 0 | a | 0.5 | b | 1.8 | d | 2.6 | d | 7.1 | c |
| SERENADE® ASO (15 mL/100 row-m) | 0 | a | 0.8 | b | 2.3 | cd | 3.2 | cd | 8 | bc |
| SERENADE® ASO (30 mL/100 row-m) | 0 | a | 0.9 | b | 2.6 | bc | 3.5 | bc | 10.2 | ab |
| SERENADE® ASO (60 mL/100 row-m) | 0.1 | a | 1.4 | a | 3.3 | a | 4.3 | a | 11 | a |
| SERENADE® ASO (135 mL/100 row-m) | 0.1 | a | 1.3 | a | 3 | ab | 4.1 | ab | 9.5 | ab |
| RHIZOMAX® (150 mL/100 row-m) | 0 | a | 0.6 | b | 2.1 | cd | 3 | cd | 8 | bc |
| TILT® 250 EC (20 mL/100 L) | 0 | a | 0.7 | b | 2.3 | cd | 3.5 | bc | 9.9 | ab |

| | | | | | | | | | | |
|---|---|---|---|---|---|---|---|---|---|---|
| *Numbers with the same letters indicate no statistically significant difference. | | | | | | | | | | |

Unless defined otherwise, all technical and scientific terms herein have the same meaning as commonly understood by one of ordinary skill in the art to which this invention belongs.

## Claims

1. A method for controlling *Ceratocystis paradoxa* in a plant, the method comprising applying to a plant and/or locus for plant growth an effective amount of at least one biological control agent which is *Bacillus subtilis* QST713 deposited under NRRL Accession No. B-21661, metabolites produced therefrom, and combinations thereof.

2. The method according to claim 1, wherein the applying is preceded by identifying that the plant and/or the locus for plant growth needs treatment.

3. The method according to any one of the preceding claims, wherein the plant is selected from the group consisting of sugarcane, pineapple, banana, cacao, coconut, and oil palm.

4. The method according to Claim 3, wherein the plant is sugarcane.

5. The method according to any one of the preceding claims, wherein an effective amount of *Bacillus subtilis* QST713 is applied to the plant and/or the locus for plant growth prior to planting and/or at planting.

6. The method according to any one of the preceding claims, wherein *Bacillus subtilis* QST713, is applied to soil.

7. The method according to Claim 6, wherein the *Bacillus subtilis* QST713, is applied at a rate of 4 x 10¹¹ to 1 x 10¹³ cfu per acre corresponding to 9.9 x 10¹¹ to 2.5 x 10¹³ cfu per hectare for soil drench treatments or 1 x 10¹⁰ to 1 x 10¹² cfu per 1000 row feet corresponding to 3,05 x 10¹⁰ to 3,05 x 10¹² cfu per 100 row meter for in furrow treatments, preferably at a rate of 4 x 10¹¹ to 8 x 10¹² cfu per acre or 5 x 10¹⁰ to 7.5 x 10¹¹ cfu per 1000 row feet corresponding to 1,53 x 10¹¹ to 2,29 x 10¹² cfu per 100 row meter.

8. The method according to Claim 6, wherein the *Bacillus subtilis* QST713, is applied to the soil in contact with plant roots or soil at a base of a plant.

9. The method according to Claim 8, wherein the *Bacillus subtilis* QST713, is applied as a single application at a rate of 1 x 10⁵ to 1 x 10⁷ cfu per gram of soil, or
the *Bacillus subtilis* QST713 is applied in multiple applications at a rate of 5 x 10¹¹ to 6 x 10¹³ cfu per acre corresponding to 1.2 x 10¹² to 1.5 x 10¹⁴ cfu per hectare per application for soil drench treatments.

10. The method according to any one of the preceding claims, wherein the at least one biological control agent is a fermentation product.

11. The method according to Claim 10, wherein the fermentation product comprises *Bacillus subtilis* QST713 cells, metabolites and residual fermentation broth.

12. The method of any one of the preceding claims, further comprising applying to the plant and/or locus for plant growth an insecticide and/or a fungicide.

13. The method of Claim 12, wherein the insecticide is selected from the group consisting of chlorpyrifos, clothianidin, cypermethrin, ethiprole, fipronil, fluopyram, imidacloprid, methiocarb, and thiodicarb.

14. A use of a composition as described in any one of claims 1 to 13 for controlling *Ceratocystis paradoxa* in a plant.

## Patentansprüche

1. Verfahren zur Bekämpfung von *Ceratocystis paradoxa* bei einer Pflanze, wobei im Rahmen des Verfahrens eine wirksame Menge mindestens eines biologischen Bekämpfungsmittels, bei welchem es sich um *Bacillus subtilis* QST713, wie er unter der NRRL-Zugangsnummer B-21661 hinterlegt wurde, daraus hervorgehende Metaboliten und deren Kombinationen handelt, auf eine Pflanze und/oder eine Pflanzenwachstumsstelle aufgebracht wird.

2. Verfahren gemäß Anspruch 1, wobei vor dem Aufbringen festgestellt wird, dass die Pflanze und/oder die Pflanzenwachstumsstelle einer Behandlung bedarf.

3. Verfahren gemäß einem beliebigen der vorhergehenden Ansprüche, wobei die Pflanze aus der Gruppe ausgewählt ist, die aus Zuckerrohr, Ananas, Banane, Kakao, Kokosnuss und Ölpalme besteht.

4. Verfahren gemäß Anspruch 3, wobei es sich bei der Pflanze um Zuckerrohr handelt.

5. Verfahren gemäß einem beliebigen der vorhergehenden Ansprüche, wobei die wirksame Menge an *Bacillus subtilis* QST713 vor dem Anpflanzen und/oder beim Anpflanzen auf die Pflanze und/oder die Pflanzenwachstumsstelle aufgebracht wird.

6. Verfahren gemäß einem beliebigen der vorhergehenden Ansprüche, wobei *Bacillus subtilis* QST713 auf den Boden aufgebracht wird.

7. Verfahren gemäß Anspruch 6, wobei der *Bacillus subtilis* QST713 mit einer Rate von 4 x 10¹¹ bis 1 x 10¹³ KBE pro Acre, entsprechend 9,9 x 10¹¹ bis 2,5 x 10¹³ KBE pro Hektar, für bodendurchtränkende Behandlungen oder von 1 x 10¹⁰ bis 1 x 10¹² KBE pro 1000 laufende Fuß, entsprechend 3,05 x 10¹⁰ bis 3,05 x 10¹² KBE pro 100 laufende Meter, für Furchenbehandlungen, vorzugsweise mit einer Rate von 4 x 10¹¹ bis 8 x 10¹² KBE pro Acre beziehungsweise 5 x 10¹⁰ bis 7,5 x 10¹¹ KBE pro 1000 laufende Fuß, entsprechend 1,53 x 10¹¹ bis 2,29 x 10¹² KBE pro 100 laufende Meter.

8. Verfahren nach Anspruch 6, wobei der *Bacillus subtilis* QST713 auf den Boden, welcher mit Pflanzenwurzeln in Kontakt ist, oder Boden, welcher sich an der Basis einer Pflanze befindet, aufgebracht wird.

9. Verfahren gemäß Anspruch 8, wobei der *Bacillus subtilis* QST713 in einem einzigen Anwendungsgang mit einer Rate von 1 x 10⁵ bis 1 x 10⁷ KBE pro Gramm Boden aufgebracht wird, oder
der *Bacillus subtilis* QST713 in mehrfachen Anwendungsgängen mit einer Rate von 5 x 10¹¹ bis 6 x 10¹³ pro Acre, entsprechend 1,2 x 10¹² bis 1,5 x 10¹⁴ KBE pro Hektar pro Anwendungsgang bei bodendurchtränkenden Behandlungen aufgebracht wird.

10. Verfahren gemäß einem beliebigen der vorhergehenden Ansprüche, wobei es sich bei dem mindestens einen biologischen Bekämpfungsmittel um ein Fermentationsprodukt handelt.

11. Verfahren gemäß Anspruch 10, wobei das Fermentationsprodukt *Bacillus subtilis* QST713-Zellen, Metaboliten und verbleibendes Fermentationsmedium umfasst.

12. Verfahren nach einem beliebigen der vorhergehenden Ansprüche, wobei es weiterhin das Aufbringen eines Insektizids und/oder eines Fungizids auf die Pflanze und/oder die Pflanzenwachstumsstelle umfasst.

13. Verfahren nach Anspruch 12, wobei das Insektizid aus der Gruppe ausgewählt ist, die aus Chlorpyrifos, Clothianidin, Cypermethrin, Ethiprol, Fipronil, Fluopyram, Imidacloprid, Methiocarb und Thiodicarb besteht.

14. Verwendung einer Zusammensetzung gemäß der Beschreibung in einem beliebigen der Ansprüche 1 bis 13 zur Bekämpfung von *Ceratocystis paradoxa* bei einer Pflanze.

## Revendications

1. Méthode destinée au contrôle de *Ceratocystis paradoxa* chez une plante, la méthode comprenant l'application à une plante et/ou un lieu de croissance des plantes, d'une quantité efficace d'au moins un agent de contrôle biologique qui est *Bacillus subtilis* QST713 déposé sous le numéro d'accès NRRL B-21661, de métabolites produits à partir de celui-ci, et de combinaisons de ceux-ci.

2. Méthode selon la revendication 1, dans laquelle l'application est précédée par l'identification du fait que la plante et/ou le lieu de croissance des plantes a besoin d'un traitement.

3. Méthode selon l'une quelconque des revendications précédentes, dans laquelle la plante est choisie dans le groupe constitué par la canne à sucre, l'ananas, le bananier, le cacaotier, le cocotier et le palmier à huile.

4. Méthode selon la revendication 3, dans laquelle la plante est la canne à sucre.

5. Méthode selon l'une quelconque des revendications précédentes, dans laquelle une quantité efficace de *Bacillus subtilis* QST713 est appliquée à la plante et/ou au lieu de croissance des plantes préalablement à la plantation et/ou au moment de la plantation.

6. Méthode selon l'une quelconque des revendications précédentes, dans laquelle *Bacillus subtilis* QST713 est appliqué au sol.

7. Méthode selon la revendication 6, dans laquelle *Bacillus subtilis* QST713 est appliqué selon un taux allant de 4 × 10¹¹ à 1 × 10¹³ ufc par acre, correspondant à de 9,9 × 10¹¹ à 2,5 × 10¹³ ufc par hectare, pour des traitements par trempage du sol, ou de 1 × 10¹⁰ à 1 × 10¹² ufc par 1000 pieds de rangée, correspondant à de 3,05 × 10¹⁰ à 3,05 × 10¹² ufc par 100 mètres de rangée, pour des traitements en sillon, préférablement selon un taux allant de 4 × 10¹¹ à 8 × 10¹² ufc par acre ou de 5 × 10¹⁰ à 7,5 × 10¹¹ ufc par 1000 pieds de rangée, correspondant à de 1,53 × 10¹¹ à 2,29 × 10¹² ufc par 100 mètres de rangée.

8. Méthode selon la revendication 6, dans laquelle *Bacillus subtilis* QST713 est appliqué au sol en contact avec les racines des plantes ou au sol au niveau d'une base d'une plante.

9. Méthode selon la revendication 8, dans laquelle *Bacillus subtilis* QST713 est appliqué sous forme d'une application unique selon un taux allant de 1 × 10⁵ à 1 × 10⁷ ufc par gramme de sol, ou
*Bacillus subtilis* QST713 est appliqué en applications multiples selon un taux allant de 5 × 10¹¹ à 6 × 10¹³ ufc par acre, correspondant à de 1,2 × 10¹² à 1,5 × 10¹⁴ ufc par hectare, par application pour des traitement par trempage du sol.

10. Méthode selon l'une quelconque des revendications précédentes, dans laquelle le au moins un agent de contrôle biologique est un produit de fermentation.

11. Méthode selon la revendication 10, dans laquelle le produit de fermentation comprend des cellules de *Bacillus subtilis* QST713, des métabolites et du bouillon de fermentation résiduel.

12. Méthode selon l'une quelconque des revendications précédentes, comprenant en outre l'application à la plante et/ou au lieu de croissance des plantes, d'un insecticide et/ou d'un fongicide.

13. Méthode selon la revendication 12, dans laquelle l'insecticide est choisi dans le groupe constitué par le chlorpyrifos, la clothianidine, la cyperméthrine, l'éthiprole, le fipronil, le fluopyram, l'imidacloprid, le méthiocarb, et le thiodicarb.

14. Utilisation d'une composition telle que décrite selon l'une quelconque des revendications 1 à 13, pour le contrôle de *Ceratocystis paradoxa* chez une plante.
